# EUROPEAN PATENT SPECIFICATION

(11) **EP 3 825 359 B1**
(45) Date of publication and mention of the grant of the patent: **16.08.2023**
(21) Application number: 19210411.5
(22) Date of filing: 20.11.2019
(51) Int. Cl.: C08L 71/02, C08G 65/336

(54) **STABILIZER FOR POLYETHER HAVING AT LEAST ONE REACTIVE SILYL GROUP**
STABILISATOR FÜR POLYETHER MIT MINDESTENS EINER REAKTIVEN SILYLGRUPPE
STABILISATEUR DE POLYÉTHER AYANT AU MOINS UN GROUPE SILYLE RÉACTIF

(43) Date of publication of application: 26.05.2021
(73) Proprietor: VITO NV, 2400 Mol (BE); Kaneka Belgium N.V., 2260 Westerlo-Oevel (BE)
(72) Inventor: Vendamme, Richard, 2400 Mol (BE); Mulunda, Mikael Monga, 2400 Mol (BE); Isnard, Florence, 2400 Mol (BE); Harumashi, Tatsuro, 2260 Westerlo-Oevel (BE); Peeters, Luc, 2260 Westerlo-Oevel (BE); Mariën, Hanne, 2260 Westerlo-Oevel (BE)
(74) Representative: V.O.

(56) References cited:
- CN-A- 104 987 637
- US-A- 3 484 397
- US-B2- 8 901 255

## Description

The present invention relates to the use of a particular stabilizer for polyethers having at least one reactive silyl group, preferably reactive terminal silyl group, to a composition containing said stabilizer and said polyethers and to potential applications of such a composition.

Silyl terminated polyethers are a special class of polymers which have as an end group of the long middle polyether section of the polymer, also referred to as a terminating group, a silyl type molecule. The reactive silyl group is crosslinked by the formation of a siloxane bond, which is accompanied by hydrolysis due to moisture even at room temperature, to give a rubbery cured product. Silyl terminated polyethers are main components in solvent-free sealant and adhesive products. These products are typically isocyanate free. Sealant products manufactured with silyl terminated polyethers have good characteristics, such as adhesion on a wide range of substrate materials, and have good temperature and UV (ultraviolet) resistance. This makes these products applicable in a wide range of applications, such as in building and construction, industry, transportation, flooring, waterproofing, DIY and many others.

The silyl terminated polyethers can be formed using relatively simple chemistry techniques. On application the products cure from a liquid or gel state to a solid. Curing entails cross-linking by the hydrolysis of silyl ethers. Cross-linking improves certain characteristics of the final material.

A specific type of such silyl terminated polyethers is known as Kaneka's MS Polymer^{™}. As a middle section it contains a functionalized polyether backbone with methoxysilane terminal groups. It provides excellent performances and makes MS Polymer-based products unique and beneficial for various applications mainly as sealant or adhesive in varying areas such as construction, industry, consumer and specialties. Examples of main applications include construction sealant, flooring adhesive, waterproofing and roof applications, industrial transportation, windscreen adhesive. MS Polymers provide environmentally friendly alternatives to existing technologies in that no solvents are required, they are isocyanate-free, and also PVC-, silicone- and detergent-free and provide very low emissions. MS Polymers provide easy and robust processing and such versatile properties as self-levelling and thixotropic, application by spray, extrusion, notched spatual or brush, tunable curing properties, primerless adhesion to many different substrates, outstanding weather resistance, high strength adhesives and low modulus sealants. A broad range of MS Polymer grades is available. These may differentiate in degree of functionalization (number and nature of groups attached to the backbone) (mono or bifunctional) and backbone structure in a wide viscosity range. Typically a dimethoxymethylsilyl terminated polyether or trimethoxysilyl terminated polyether is used.

US 8901255 B2 describes a curable composition, comprising polyether polymers containing a reactive silyl group and a (meth)acrylic polymer containing a reactive silyl group, that has excellent elongation properties.

Long term durability is required for a lot of the applications in which silyl terminated polyethers are currently used. Due to the degradation of the main chain structure of the silyl terminated polyether the addition of stabilizer is necessary to maintain the beneficial properties under severe conditions. Generally hindered phenolics stabilizers are used as antioxidant.

US 3484397 A describes a method of improving heat stability of vinyl chloride polymers by including ligno components. CN 104987637 A describes lignin-based compounds as heat stabilizer for improving the heat stability of polyvinyl alcohol.

There continues to exist a need for an effective stabilizer for silyl terminated polyethers. Further such stabilizer should be compatible with the silyl terminated polyether.

Accordingly the present invention provides a composition comprising a polyether having at least one reactive silyl group, preferably reactive terminal silyl group and a stabilizer, wherein said stabilizer is a lignin and/or lignin derivative.

Adding lignin to a polyether having at least one reactive silyl group provides a stabilizing effect to the polymer. In particular heat stability and UV stability is improved. Further by functionalization of the lignin, the compatibility with the polymer can be improved providing lower viscosity to the composition after blending. Also since lignin is biobased the renewable content of the composition is increased.

The polyether containing at least one reactive silyl group for use in the present invention has as main skeleton a polyether polymer. As used herein the term "polyether/polyethers" designates a polyoxyalkylene group. Such a group may be represented by the formula (CₘH₂ₘO)_{y} wherein m is from 2 to 4 inclusive and y is greater than 4 and may generally range from 5 to 1000. The polyoxyalkyene group may comprise oxyethylene units (C₂H₄O), oxypropylene units (C₃H₆O), oxybutylene units (C₄H₈O), oxytetramethylene units or mixtures thereof. The main structure may be composed of only one kind of repeating oxyalkylene units or two or more kinds of repeating units. When mixtures are present (such as polyoxyethylene-polyoxypropylene copolymer) typically they are in the form of a random copolymer. According to a preferred embodiment of the present invention the polyether chain is a polyoxypropylene chain. The main chain structure of the polyether may be linear or may be branched. When the polymer has branched chains, the branched chain number is preferably 1 to 4, most preferably 1.

In some embodiments of the invention, the backbone skeleton of the reactive silyl-group containing polyether may contain other components such as a urethane bond component as long as the effect of the present invention is not significantly impaired. The urethane bond component is not particularly limited and examples thereof include groups (hereinafter also referred as amido segments) formed by reaction between an isocyanate group and an active hydrogen group. Such amido segments can be represented by the formula (1): -NR¹-C(=O)- wherein R¹ is an organic group having 1 to 10 carbon atoms or a hydrogen atom. The aforementioned segment specifically includes a urethane group produced by reaction of an isocyanate group and a hydroxyl group, or an amino group and carbonate; a urea group produced by reaction of an isocyanate group and an amino group; a thiourethane group produced by a reaction of an isocyanate group and a mercapto group and the like. Moreover a group produced by a further reaction of active hydrogen in the abovementioned urethane group, urea group and thioureagroup, and an isocyanate group is also encompassed in the group of formula (1). When the main chain of the polyether contains an amido segment, the number on average of the amido segment per molecule is preferably 1 to10, more preferably 1.5 to 5, particularly preferably 2 to 3.

The reactive silyl group of the polyether as used herein is a silicon-containing group having a hydroxyl group or a hydrolysable group bonded to a silicon atom and capable of forming a siloxane bond. The reactive silyl group is preferably represented by the formula (2):

- SiR²ₐY₃₋ₐ

wherein R² is a substituted or unsubstituted hydrocarbon group having 1 to 20 carbon atoms, each Y is independently a hydroxyl group or a hydrolysable group and a is 0 or 1. A reactive silyl group represented by formula (2) is a group crosslinkable by forming a siloxane bond by a reaction accelerated by a catalyst for silanol condensation. Examples of R² in the formula (2) include alkyl groups, such as methyl group, ethyl group and the like; cycloalkyl groups such as cyclohexyl group and the like; aryl groups such as phenyl group and the like; aralkyl groups such as benzyl group and the like; a triorganosiloxy group represented by -OSi(R')₃ wherein R' is methyl group, phenyl group and the like; fluoroalkyl groups such as fluoromethyl group, difluoromethyl group and the like; chloroalkyl groups such as chloromethyl group, 1-chloroethyl group and the like; alkoxyalkyl groups such as methoxymethyl group, ethoxymethyl group, phenoxymethyl group, 1-methoxyethyl group and the like; aminoalkyl groups such as aminomethyl group, N-methylaminomethyl group, N,N-dimethylaminomethyl group and the like; acetoxymethyl group, methylcarbamate group, 2-cyanoethyl group and the like. Of these, alkyl group is preferably, and methyl group is particularly preferable. As hydrolyzable group for Y in the formula (2), a known hydrolysable group can be mentioned. Examples of the hydrolysable group include a hydrogen, a halogen, an alkoxy group, an alkenyloxy group, an aryloxy group, an acyloxy group, a ketoxymate group, an amino group, an amido group, an acid amido group, an aminooxy group, a mercapto group and the like. Of these, a halogen, an alkoxy group, an alkyloxy group, and an acyloxy group are preferable with an alkoxy group as more preferable and a methoxy and an ethoxy group as particularly preferable. As the substituted or unsubstituted hydrocarbon group having 1 to 20 carbon atoms for R² in the formula (2), an alkyl group having 1 to 10 carbon atoms, an aryl group having 6 to 10 carbon atoms or an aralkyl group having 7 to 10 carbon atoms is preferable, and these may be bonded to halogen atom, nitro group, amino group, cyano group or hydroxyl group as a substituent. As a reactive silyl group represented by the formula (2), trimethoxysilyl group, triethoxysilyl group, tris(2-propenyloxy) silyl group, triacetosilyl group, dimethoxymethylsilyl group, diethoxymethylsilyl group, diisopropoxymethylsilyl group, (chloromethyl)dimethoxysilyl group, (methoxymethyl)dimethoxysilyl group, (methoxymethyl)diethoxysilyl group, and (ethoxymethyl)dimethoxysilyl group are specifically preferable. Of these dimethoxymethylsilyl group, trimethoxysilyl group and triethoxysilyl are particularly preferable.

The polyethers for use according to the invention may have only one reactive silyl group or more than one. The average number of the reactive silyl groups per molecule of polyether is generally however not more than 6, preferably not more than 5. Preferably the average number of reactive silyl groups contained in the polyether is 1 to 4, more preferably 1.1 to 3, still more preferably 1.3 to 2.5 and particularly preferably 1.5 to 2.3 per molecule. The reactive silyl groups are preferably located at terminal moieties of the main chain polyether structure.

The number average molecular weight of the polyether containing at least one reactive silyl group is preferably not less than 2000, preferably not less than 8000. It is preferably not more than 60000, more preferably not more than 50000, particularly preferably not more than 35000.

In some embodiments of the present invention the polyether containing at least one reactive silyl group can be used together with a (meth)acrylate based polymer containing at least one reactive silyl group. More detailed descriptions of such (meth)acrylate based polymers containing reactive silyl groups can be found in US 10150895 and EP 2684690. In other embodiments the polyether containing at least one reactive silyl group can be used together with epoxy and/or bitumen.

Further detailed descriptions of suitable polyethers containing at least one reactive silyl group for use in the present invention and ways to prepare them are provided in US 10150895 and EP 2684690.

Suitable examples of the polyether for use in the present invention are Kaneka's MS Polymers ^{™} such as S203H, S303H, S227, S327, SAX 220, SAX 260, SAX 400, SAX 015, SAT 145, MAX 602, MAX 923, MAX 951, SAX 750, SAX 510, SAX 520, SAX 530, , SAX 580, SAX 590, SAX575 MA451, MA480, MA850, MA452 and MA490, in particular MS Polymer ^{™} S303H, but the stabilizer of the present invention can also be used for other types of polyethers having at least one reactive silyl group, for example, silylated polyurethanes.

The stabilizer used in the present invention is a lignin and/or a lignin derivative.-In the context of the present invention, lignin refers to native lignin or technical lignin and a lignin derivative is defined as a compound derived from lignin via a chemical process such as fractionation, depolymerization or chemical modification (end-capping).

Native lignin, being a major constituent in structural cell walls of plants, has a polyphenolic structure. The monomeric units of phenylpropane in lignin polymers are linked in a complex network trough different types of ether and ester bonds as well as carbon-carbon bonds. Lignin is separated from the other lignocellulosic parts of plants by physical and/or chemical means. Not only the botanical source, but also the delignification (pulping) process and extraction processes will highly influence the lignin structure, purity and properties. During the delignification of biomass ester and ether linkages will be largely disrupted and lignin fragments will be dissolved in the pulping liquor. The resulting technical lignin will differ significantly compared to the original lignin in the biomass. The variation in technical lignin structure is partly caused by the botanical origin of the polyphenol but equally important is the method of extraction. Common pulping processes used for the extraction of lignin from lignocellulosic raw materials include sulfate or kraft pulping process (kraft lignin), sulfite pulping process (lignosulfonates), soda pulping process (soda lignin), organosolv pulping and/or fractionation process (organosolv lignin which is generally of high quality and purity).

Any type of lignin can be used in the present invention such as kraft lignin, lignosulfonate, soda lignin, organosolv lignin and others.

Lignin generally has a molecular weight that can vary between 1000 and 300000 Da.

In order to improve the compatibility with/solubility in the polyether containing at least one reactive silyl group, the molecular weight of the lignin and/or lignin derivative is preferably decreased. Compatibility in this respect may be defined as a measure of how stable the lignin or lignin derivative is when and after being mixed with the polyether. Hence the lignin and/or lignin derivative for use in the present invention preferably has weight average molecular weight of below 5000, more preferably below 3000 g/mol, as defined by Gel Permeation Chromatography (GPC).

In order to significantly reduce the molecular weight of the lignin or lignin derivative to said ranges three approaches can be taken. The lignin can be depolymerized into monomers and oligomers. Acid-, base-, metal-catalyzed as well as ionic liquid-assisted, sub- and supercritical fluids-assisted depolymerisations are possible. After depolymerization one obtains a mixture of phenolic monomers, dimers and oligomers which can be further separated. Further descriptions of such suitable depolymerisations can be found in "Bio-based Epoxy Resins from Deconstructed Native Softwood Lignin" by Van de Pas D.J. & Tor K.M. in Biomacromolecules (2017), "Chemicals from lignin: an interplay of lignocellulose fractionation, depolymerisation and upgrading" by Sels S.B.F. in Chem. Soc. Rev, 47 (2018), p 852-908 and "Biofuels and Biomass Depolymerisation of lignin over Ni-Pd bimetallic catalyst using isopropanol as in situ hydrogen source" by Jiang B., Hu J., Qiao Y., Jiang X. & Lu P. in Energy & Fuels (2019). Another approach involves ultrafiltration with membrane. Membrane separation techniques can be used to fractionate lignin liquor and lower molecular weight compounds up to 500 Da. Further information on said techniques can be found in "Lignin fractionation from E. Globulus kraft liquor by ultrafiltration in a three stage membrane sequence" by Costa C.A.E., Pinto P.C.R. & Rodrigues A.E. in Sep. Purif. Technol. 192 (2018) p 140-151, "Characterisation of Kraft Lignin Fractions Obtained by Sequential Ultrafiltration and Their potential application as a biobased component in blends with polyethylene" by Huang C., He J., Naroon R., Wang Y. & Yong Q. in ACS Sustain. Chem. Eng. (2017) and "Membrane filtration of kraft lignin: structural characteristics and antioxidant activity of low-molecular-weight fraction" by Aminsadeh S., Lauberts M., Dobele G, Ponomarenko J. & Mattsson T. in Ind. Crop. Prod. 112 (2018) p 200-209. A third approach involves solvent fractionation: an organic solvent or solvent mixture can be used at atmospheric pressure and room temperature or refluxing temperature to reduce the molecular weight and heterogeneity of lignin. For instance ethyl acetate has been used to isolate lignin fraction with molecular weight below 1000 Da. See "Fractionation of five technical lignins by selective extraction in green solvents and characterisation of isolated fractions" by Boeriu, C. G., Fit, I., Stoutjesdijk, J. & Peter, F. in Ind. Crop. Prod. 62 (2014) p 481-490, "Exploring the application potential of incompletely soluble organosolv lignin as a macromonomer for polyurethane synthesis" by Arshanitsa, A., Krumina, L., Telysheva, G. & Dizhbite T. in Ind. Crop. Prod. 92 (2016) p 1-12 and "Effect of molecular size of lignin on the formation of aromatic hydrocarbon during zeolite catalyzed pyrolysis" by Kim, J. & Choi, J. W. in Fuel 240 (2019) p 92-100.

Typically, the lower molecular weight lignin used in the present invention is obtained via solvent fractionation of technical lignin or via a depolymerization process.

The lignin derivative for use in the present invention may be an end-capped lignin. Such an end-capped lignin is obtained by reaction of at least one-hydroxyl group of lignin with a reactant having reactive groups capable of forming bonds (e.g. ether, ester, carbon-carbon bonds) with said hydroxyl group. The lignin hydroxyl group that is being reacted may be an aliphatic and/or aromatic (such as phenolic) one.

Suitable lignin derivatization techniques are acetylation, silylation or methylation (Gellerstedt G.(1992) Gel Permeation chromatography, in Methods in lignin chemistry. Eds Lin S.Y., Dence C.W., Springer_verlag, Berlin, p 487-497).

In such an end-capped lignin generally at least one hydroxyl group has been modified into an -OR group wherein R is selected from an alkyl group, preferably having 1 to 10 carbon atoms, a cycloalkyl group preferably having 1 to 10 carbon atoms, an aryl group preferably having 1 to 10 carbon atoms, a silyl group preferably having 1 to 10 carbon atoms, an ester group preferably having 1 to 10 carbon atoms; each of said group may be substituted or unsubstituted, branched or linear and/or may contain a heteroatom such as O, S, N. Most preferably R is a dimethyl tert butyl silyl group or tris(isopropyl) silyl, or tert butyl group or methyl carbonyl group.

The silylation reaction of terminal hydroxyl groups of lignin can be visualized as follows:

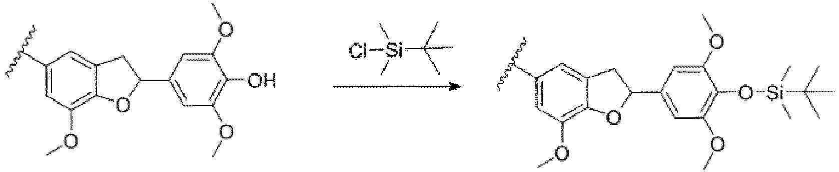

The endcapping degree in such an end-capped lignin is preferably at least 90 %, meaning that at least 90 % of the terminal hydroxyl groups is endcapped. The endcapping degree is calculated based on the conversion.

The hydroxyl number of the end-capped lignin is preferably below 1 mmol/g.

The amount of lignin and/or lignin derivative for use in the present invention is generally in the range 1 to 10 parts by weight, preferably 3 to 7 parts by weight, more preferably about 5 parts by weight based on the total amount of polyether having at least one reactive silyl group which is set as 100 parts by weight.

The composition of the present invention may further contain various additives.

Suitable additives can be selected from catalysts, rheology control agents such as thixotropic agents (e.g. polyamide waxes, fumed silica), pigments (e.g. TiO₂, carbon black), anti-oxidants, UV and light stabilizers (e.g. hindered phenol antioxidants), adhesion promotors (e.g. amino/epoxysilanes), plasticizers (e.g. phthalates, PPG), dihydrogen agents, fillers (e.g. talc, fumed silica, silica, calcium carbonate).

The composition of the present invention is prepared by simply mixing the ingredients at a temperature of between 50°C and 120°C, preferably 60°C to 100°C.

The composition of the present invention can be used as binder, coating, sealant or adhesive, or any other application for which silyl terminated polyethers are generally used.

The invention is illustrated but not limited by the following examples in which the following ingredients were used:
MS Polymer ^{™} S303H: silyl-terminated polyether available from Kaneka DL: Depolymerized Lignin whose molecular weight is 1700 g/mol.
FL: Fractionated Lignin obtained via extraction with ethyl methyl ketone and whose molecular weight is 1920 g/mol.
SiDL: silylated lignin: silyl functionalized DL which was obtained by a reaction between hydroxy group of DL and t-Butyldimethylchlorosilane with a reaction ratio of 100%; and whose molecular weight is 2100 g/mol.
SiFL: silylated lignin : silyl functionalized FL which was obtained by a reaction between hydroxy group of FL and t-Butyldimethylchlorosilane with a reaction ratio of 91%; and whose molecular weight is 2820 g/mol.

In the following examples, we will refer to lignin derivative as a generic term to include technical lignin (kraft lignin), depolymerized lignin, solvent-fractionated lignin, as well as end-capped lignin (silylated lignin).

### Example 1: compatibility of lignin in silyl terminated polyether

The compatibility of various types of lignin was tested in a composition containing 95 parts by weight of MS Polymer ^{™} S303H and 5 parts by weight of various types of lignin. The test method is described below.

Test method: 57g of MS polymer^{™} S303H and 3g of various types of lignin were placed in a glass flask and mixed at 60°C for 1 hour. After the mixing process, the mixed sample was cooled down and its compatibility was checked visually at room temperature.

The characteristics of each lignin type (number average and weight average molecular weight, total hydroxyl groups and reaction ratio of hydroxy group) and its compatibility result is listed in Table 1 below.

**Table 1**

| Lignin type | Mn (g/mol) | Mw (g/mol) | Total OH (mmol/g) | Reaction ratio (%) | Compatibility |
|---|---|---|---|---|---|
| FL | 893 | 1920 | 6.6 | 0 | Incompatible |
| DL | 897 | 1700 | 5.0 | 0 | Incompatible |
| SiFL | 1180 | 2820 | 0.6 | 91 | Compatible |
| SiDL | 1140 | 2100 | 0.0 | 100 | Compatible |

These results show that compatibility of the lignin with the silyl terminated polyether improves if the molecular weight (in particular Mw) of the lignin decreases and if the lignin is end-capped with a silyl group.

### Example 2: properties of compositions containing different types of lignin

Various compositions were made containing 100 parts by weight of MS Polymer^{™} S303H or mixture of 95 parts by weight of MS Polymer^{™} S303H and 5 parts by weight of various types of lignins. Viscosity of the composition was measured with e-type viscometer at 23°C. Cured sheets of each sample were prepared according to the following method.

Preparation method of cured sheet: Into 100 parts by weight of the polymer sample was incorporated 3.0 parts by weight of tin octylate, 0.5 parts by weight of laurylamine, and 0.6 parts by weight of water into even state while the polymer composition was being stirred. The resultant mixture was centrifuged to be defoamed and subsequently a mold frame made of polyethylene was filled with the mixture in such a way so as not to put air bubbles into the frame. The mixture was cured at 23°C and 50% RH for 1 hour and further cured at 70°C for 20 hours to produce a sheet having a thickness of about 3mm.
On the cured sheet, tensile test, heat stability test and UV stability test were performed using the following methods.

Tensile test method: Cured sheets were punched out into #3-dummbell form samples and these were subjected to a tensile strength test at 23°C and 50% RH to measure the stress at 50% elongation(M50), the tensile strength at break(TB), and the elongation at break(EB). The tensile strength was measured at a tensile rate of 200mm/min, with an autograph(AGS-J) manufactured by Shimadzu Corp.

Thermal stability test method: Thermal stability of the cured sheets was measured with DSC measurement machine. Its heating rate was 2°C/min.

UV stability test method: Accelerated wheatering test of cured sheet was performed with QUV-A machine. Stability was judged from the storage time until the cured sheet becomes completely liquified.

All analysis results were shown in Table 2.

**Table 2**

| Property | Unit | S303H | S303H/DL | S303H/ SiDL | S303H/ SiFL |
|---|---|---|---|---|---|
| Viscosity | Pa.s | 13 | 46 | 14 | 28 |
| M50 | MPa | 0.21 | 0.25 | 0.13 | 0.19 |
| TB | MPa | 0.38 | 0.45 | 0.39 | 0.46 |
| EB | % | 131 | 126 | 262 | 201 |
| Thermal stability | °C | 180 | 218 | 199 | 196 |
| UV stability | hours | 48 | 72 | 120 | - |

These results show that addition of lignin improves thermal stability and UV stability of the silyl terminated polyether. Further the use of lignin showing good compatibility with the silyl terminated polyether (end-capped silyl lignin) provides lower viscosity compositions.

### Example 3: effect on heat stability of formulation

Samples of MS polymer ^{™} S303H or mixture of MS polymer ^{™} S303H/SiDL prepared in Example 1 were formulated and formulated sheet was prepared using the following method.

Preparation method of formulated sheet: Into 100 parts by weight of MS polymer ^{™} S303H or mixture of MS polymer ^{™} S303H/SiDL were incorporated 50 parts by weight of diisononyl phthalate(DINP, manufactured by ExxonMobil), 120 parts by weight of precipitated calcium carbonate(HAKUENKA CCR, manufactured by Shiraishi Calcium Kaisha, Ltd.) and 20 parts by weight of titanium oxide(Ti Pure, manufactured by Chemours), 5 parts by weight of amide wax(CLAYVALLAC SLT, manufactured by Claverley), 1 parts by weight of Tinuvin 326(manufactured by BASF), 1 parts by weight of Irganox 245(manufactured by BASF), and 1 parts by weight of Tinuvin 770(manufactured by BASF). A three-roll machine was used to disperse components into an even (equilibrium) state. Thereafter, thereto were added 2 parts by weight of vinyltrimethoxysilane (Dynasilan VTMO, manufactured by Evonik), 3 parts by weight of 3-aminopropyltrimethoxysilane (Dynasilan AMMO, manufactured by Evonik), and 1.8 parts by weight of dioctyltin diketaboate(manufactured by TIBCHEMICALS), and all the components were sufficiently mixed with each other with a spatula. An autorotation/orbital-revolution mixer was then used to mix the components with each other into an even state, and defoam the mixture. The composition was used to fill a mold frame, and cured at 23°C and 50% RH for 3 days, and further cured at 50°C for 4 days to produce a sheet-form cured product having a thickness of about 3mm.

The heat stability of the cured product with and without lignin was determined by measuring the Shore A Hardness of the cured product initially (after 7 days at 23°C and 50% RH) and after several days at 120°C according to ASTM D2240. The results are reported in Table 3 below.

**Table 3**

| Time of measurement | S303H | S303H/SiDL |
|---|---|---|
| Initial | 43 | 39 |
| After 1 day at 120°C | 41 | 39 |
| After 4 days at 120°C | 37 | 37 |
| After 7 days at 120°C | 38 | 34 |
| After 11 days at 120°C | 32 | 33 |
| After 14 days at 120°C | 21 | 31 |
| After 21 days at 120°C | Impossible to measure | 23 |
| After 28 days at 120°C | | Impossible to measure |

These results show that the heat stability is improved by adding a lignin. Whereas the product without the lignin is not stable anymore after 14 days the product with lignin remains stable until 21 days.

## Claims

1. Composition comprising a polyether having at least one reactive silyl group, preferably reactive terminal silyl group and a lignin and/or lignin derivative.

2. Composition according to claim 1 wherein the main chain of the polyether having at least one reactive silyl group is a polyoxypropylene chain.

3. Composition according to claim 1 or 2 wherein the reactive silyl group is a silyl group containing at least one alkoxy group, preferably two or three alkoxy groups and is preferably selected from at least one of methyl dimethoxy silyl group, trimethoxy silyl group and triethoxy silyl group.

4. Composition according to any one of the preceding claims wherein the lignin and/or lignin derivative has weight average molecular weight of below 5000, preferably below 3000 g/mol, as determined by Gel Permeation Chromatography.

5. Composition according to any one of the preceding claims wherein the lignin and/or lignin derivative is compatible with said polyether.

6. Composition according to any one of the preceding claims wherein the lignin derivative is an end-capped lignin.

7. Composition according to claim 6 wherein at least one hydroxyl group of the lignin has been modified into an -OR group wherein R is selected from an alkyl group preferably having 1 to 10 carbon atoms, a cycloalkyl group preferably having 1 to 10 carbon atoms, an aryl group preferably having 1 to 10 carbon atoms, a silyl group preferably having 1 to 10 carbon atoms, an ester group preferably having 1 to 10 carbon atoms; each of said group may be substituted or unsubstituted, branched or linear and/or may contain a heteroatom such as O, S, N.

8. Composition according to claim 7 wherein R is dimethyl tert butyl silyl or tris(isopropyl)silyl.

9. Composition according to any one of claims 6 to 8 wherein the endcapping degree is at least 90 %.

10. Composition according to any one of claims 6 to 9 wherein the hydroxyl number of the end-capped lignin is below 1 mmol/g.

11. Composition according to any one of the preceding claims wherein the amount of lignin and/or lignin derivative is in the range 1 to 10 parts by weight, preferably 3 to 7 parts by weight, more preferably about 5 %parts by weight based on the total amount of said polyether which is set as 100 parts by weight.

12. Composition according to any one of the preceding claims further comprising at least one additive preferably selected from the group consisting of catalysts, rheology control agents, pigments, anti-oxidants, UV and light stabilizers, adhesion promotors, plasticizers, dihydrogen agents and fillers.

13. Use of a composition as defined in any one of the preceding claims as a binder, coating, sealant or adhesive.

14. Use of a lignin and/or lignin derivative as defined in any one of claims 4 to 10 as a stabilizer for a polyether having at least one reactive silyl group.

15. Process for preparing a composition as defined in any one of claims 1 to 12 comprising the steps of mixing the lignin and/or lignin derivative with said polyether at a temperature in the range of 50 to 120°C, preferably 60 to 100°C.

## Patentansprüche

1. Zusammensetzung, umfassend einen Polyether mit wenigstens einer reaktiven Silylgruppe, vorzugsweise reaktiver terminaler Silylgruppe und einem Lignin und/oder Ligninderivat.

2. Zusammensetzung nach Anspruch 1, wobei die Hauptkette des Polyethers mit wenigstens einer reaktiven Silylgruppe eine Polyoxypropylenkette ist.

3. Zusammensetzung nach Anspruch 1 oder 2, wobei die reaktive Silylgruppe eine Silylgruppe ist, enthaltend wenigstens eine Alkoxygruppe, vorzugsweise zwei oder drei Alkoxygruppen, und vorzugsweise ausgewählt ist aus wenigstens einer Methyldimethoxysilylgruppe, Trimethoxysilylgruppe und Triethoxysilylgruppe.

4. Zusammensetzung nach einem der vorhergehenden Ansprüche, wobei das Lignin und/oder Ligninderivat ein gewichtsmittleres Molekulargewicht von weniger als 5000, vorzugsweise weniger als 3000 g/mol hat, wie durch Gelpermeationschromatographie bestimmt.

5. Zusammensetzung nach einem der vorhergehenden Ansprüche, wobei das Lignin und/oder Ligninderivat mit dem Polyether kompatibel ist.

6. Zusammensetzung nach einem der vorhergehenden Ansprüche, wobei das Ligninderivat ein endverkapptes Lignin ist.

7. Zusammensetzung nach Anspruch 6, wobei wenigstens eine Hydroxylgruppe des Lignins in eine -OR-Gruppe modifiziert wurde, wobei R ausgewählt ist aus einer Alkylgruppe vorzugsweise mit 1 bis 10 Kohlenstoffatomen, einer Cycloalkylgruppe vorzugsweise mit 1 bis 10 Kohlenstoffatomen, einer Arylgruppe vorzugsweise mit 1 bis 10 Kohlenstoffatomen, einer Silylgruppe vorzugsweise mit 1 bis 10 Kohlenstoffatomen, einer Estergruppe vorzugsweise mit 1 bis 10 Kohlenstoffatomen; jede der Gruppen kann substituiert oder unsubstituiert, verzweigt oder linear sein und/oder kann ein Heteroatom wie O, S, N enthalten.

8. Zusammensetzung nach Anspruch 7, wobei R Dimethyl-tert-butylsilyl oder Tris(isopropyl)silyl ist.

9. Zusammensetzung nach einem der Ansprüche 6 bis 8, wobei der Verkappungsgrad wenigstens 90 % ist.

10. Zusammensetzung nach einem der Ansprüche 6 bis 9, wobei die Hydroxylzahl des endverkappten Lignins unter 1 mmol/g ist.

11. Zusammensetzung nach einem der vorhergehenden Ansprüche, wobei die Menge von Lignin und/oder Ligninderivat in dem Bereich von 1 bis 10 Gewichtsteilen, vorzugsweise 3 bis 7 Gewichtsteilen, bevorzugter etwa 5 % Gewichtsteilen, basierend auf der Gesamtmenge des Polyethers, die auf 100 Gewichtsteile festgelegt ist, ist.

12. Zusammensetzung nach einem der vorhergehenden Ansprüche, ferner umfassend wenigstens ein Additiv, vorzugsweise ausgewählt aus der Gruppe, bestehend aus Katalysatoren, Rheologiekontrollmitteln, Pigmenten, Antioxidantien, UV- und Lichtstabilisatoren, Haftvermittlern, Weichmachern, Dihydrogenmitteln und Füllstoffen.

13. Verwendung einer Zusammensetzung, wie definiert in einem der vorhergehenden Ansprüche, als Bindemittel, Beschichtung, Dichtungsmittel oder Klebstoff.

14. Verwendung eines Lignins und/oder Ligninderivats, wie definiert in einem der Ansprüche 4 bis 10, als ein Stabilisator für einen Polyether mit wenigstens einer reaktiven Silylgruppe.

15. Verfahren zum Herstellen einer Zusammensetzung, wie definiert in einem der Ansprüche 1 bis 12, umfassend die Schritte von Mischen des Lignins und/oder Ligninderivats mit dem Polyether bei einer Temperatur in dem Bereich von 50 bis 120°C, vorzugsweise 60 bis 100°C.

## Revendications

1. Composition comprenant un polyéther comportant au moins un groupe silyle réactif, de préférence un groupe silyle réactif terminal, et une lignine et/ou un dérivé de lignine.

2. Composition conforme à la revendication 1, dans laquelle la chaîne principale du polyéther comportant au moins un groupe silyle réactif est une chaîne poly(oxypropylène).

3. Composition conforme à la revendication 1 ou 2, dans laquelle le groupe silyle réactif est un groupe silyle comportant au moins un groupe alcoxy, et de préférence deux ou trois groupe alcoxy, et est de préférence choisi comme au moins l'un des groupes méthyl-diméthoxy-silyle, triméthoxy-silyle et triéthoxy-silyle.

4. Composition conforme à l'une des revendications précédentes, dans laquelle la lignine et/ou le dérivé de lignine présente(nt) une masse molaire moyenne en poids, telle que déterminée par chromatographie par perméation de gel, inférieure à 5000 g/mol, et de préférence inférieure à 3000 g/mol.

5. Composition conforme à l'une des revendications précédentes, dans laquelle la lignine et/ou le dérivé de lignine est ou sont compatible(s) avec ledit polyéther.

6. Composition conforme à l'une des revendications précédentes, dans laquelle le dérivé de lignine est une lignine à coiffe terminale.

7. Composition conforme à la revendication 6, dans laquelle au moins un groupe hydroxyle de la lignine a été modifié en un groupe symbolisé par -OR où R représente une entité choisie parmi un groupe alkyle comportant de préférence de 1 à 10 atomes de carbone, un groupe cycloalkyle comportant de préférence de 1 à 10 atomes de carbone, un groupe aryle comportant de préférence de 1 à 10 atomes de carbone, un groupe silyle comportant de préférence de 1 à 10 atomes de carbone, et un groupe ester comportant de préférence de 1 à 10 atomes de carbone, étant entendu que chacun de ces groupes peut porter ou non un ou des substituant(s), être linéaire ou ramifié, et/ou comporter un hétéroatome, tel qu'un atome d'oxygène, de soufre ou d'azote.

8. Composition conforme à la revendication 7, dans laquelle R représente un groupe diméthyl-tertiobutyl-silyle ou un groupe tris(iso-propyl)-silyle.

9. Composition conforme à l'une des revendications 6 à 8, dans laquelle le degré de coiffage terminal vaut au moins 90 %.

10. Composition conforme à l'une des revendications 6 à 9, dans laquelle l'indice d'hydroxyle de la lignine à coiffe terminale vaut moins de 1 mmol/g.

11. Composition conforme à l'une des revendications précédentes, dans laquelle la proportion de lignine et/ou dérivé de lignine, rapportée à la quantité totale dudit polyéther considérée comme valant 100 parties en poids, se situe dans l'intervalle allant de 1 à 10 parties en poids et de préférence de 3 à 7 parties en poids, et mieux encore, vaut environ 5 parties en poids pour cent.

12. Composition conforme à l'une des revendications précédentes, comprenant en outre au moins un adjuvant choisi de préférence dans l'ensemble constitué par les catalyseurs, agents d'ajustement de rhéologie, pigments, anti-oxydants, stabilisants anti-UV et photo-stabilisants, promoteurs d'adhérence, plastifiants, agents dihydrogène et charges.

13. Utilisation d'une composition conforme à l'une des revendications précédentes en tant que liant, revêtement, agent d'étanchéifi-cation ou adhésif.

14. Utilisation d'une lignine et/ou d'un dérivé de lignine, telle ou tel que défini(e) dans l'une des revendications 4 à 10, en tant que stabilisant pour un polyéther comportant au moins un groupe silyle réactif.

15. Procédé de préparation d'une composition conforme à l'une des revendications 1 à 12, comportant les étapes consistant à mélanger la lignine et/ou le dérivé de lignine avec ledit polyéther, à une température située dans l'intervalle allant de 50 à 120 °C, et de préférence de 60 à 100 °C.
